# EUROPÄISCHE PATENTSCHRIFT

(11) **EP 2 331 382 B1**
(45) Veröffentlichungstag und Bekanntmachung des Hinweises auf die Patenterteilung: **23.01.2013**
(21) Anmeldenummer: 09778626.3
(22) Anmeldetag: 21.09.2009
(51) Int. Cl.: B62D 3/06, B62D 5/04, B62D 5/22, F16H 25/24, F16H 57/04

(54) **HYDROSTATISCHER ANTRIEB FÜR EIN LENKSYSTEM**
HYDROSTATIC DRIVE FOR A STEERING SYSTEM
ENTRAÎNEMENT HYDROSTATIQUE POUR UN SYSTÈME DE DIRECTION

(30) Priorität: 09.10.2008 DE 102008050595
(43) Veröffentlichungstag der Anmeldung: 15.06.2011
(73) Patentinhaber: ThyssenKrupp Presta AG, 9492 Eschen (LI)
(72) Erfinder: KONTNER, Dennis, 73033 Göppingen (DE); KIFORIUK, Alexander, 73061 Ebersbach an der Fils (DE)
(74) Vertreter: Lenzing Gerber Stute
(86) Internationale Anmeldenummer: PCT/EP2009/006795
(87) Internationale Veröffentlichungsnummer: WO 2010/040447

(56) Entgegenhaltungen:
- EP-A1- 0 667 279
- EP-A2- 0 133 003
- DE-A1- 2 821 726
- DE-A1-102004 061 834
- DE-A1-102006 053 244
- JP-A- 2001 311 459
- SU-A1- 1 677 429
- US-A- 3 824 905
- US-A1- 2006 113 142

## Beschreibung

Die vorliegende Erfindung betrifft eine Kraftfahrzeugservolenkung mit den Merkmalen des Oberbegriffs des Anspruchs 1.

Derartige Lenkungen sind aus dem Stand der Technik bekannt, beispielsweise aus der DE 10 2006 053 244 Al. Diese Zahnstangenlenkungen mit elektrischer Servounterstützung weisen ein langgestrecktes, quer zur Fahrtrichtung angeordnetes und rohrförmiges Lenkungsgehäuse auf, in dem eine Zahnstange in Längsrichtung verschieblich gelagert ist. Die Zahnstange ist wiederum über Spurstangen mit den gelenkten Rädern des Kraftfahrzeugs verbunden, so dass eine Linearbewegung in Richtung der Längsachse der Zahnstange zu einem Verschwenken der gelenkten Räder führt.

Bei Einsatz eines rotatorischen Antriebs wie beispielsweise eines Elektromotors muss ein Getriebe vorgesehen sein, das die Drehbewegung in eine Linearbewegung umsetzt. Beim gattungsgemäßen Stand der Technik ist dies ein Spindeltrieb mit einem Kugelumlaufgetriebe, welches mit einer koaxial zu der Zahnstange angeordneten Kugelmutter ausgestattet ist. Die Kugelmutter wird von einem Elektromotor direkt, über eine Verzahnung oder über einen Riementrieb angetrieben. Ein kompatibles Gewinde auf der Zahnstange erzeugt dann bei einer Drehbewegung der Kugelmutter die entsprechende Linearbewegung der Zahnstange. Der Kugelgewindetrieb ist reibungsarm und geräuscharm. Er ist aber nur beschränkt belastbar. Für schwerere Kraftfahrzeuge wie z. B. leichte LKW ist diese Technik deshalb nur beschränkt einsetzbar.

Es ist deshalb Aufgabe der vorliegenden Erfindung, eine Zahnstangenlenkung mit einem höher belastbaren Getriebe zu schaffen.

Diese Aufgabe wird von einer Zahnstangenlenkung mit den Merkmalen des Anspruchs 1 gelöst.

Weil das Getriebe zur Umsetzung einer Drehbewegung in eine Linearbewegung ein hydrostatischer Spindeltrieb ist, ist die erzeugbare Vorschubkraft der Zahnstange wesentlich höher als bei einem gleich großen oder gleich schweren Kugelgewindetrieb. Der hydrostatische Linearantrieb ist äußerst verschleißarm, geräuscharm und reibungsarm. Wenn ein Hohlwellenmotor als Antrieb vorgesehen ist, kann die hydrostatische Mutter direkt angetrieben werden. Auch dieser Antrieb.ist besonders geräuscharm. Es kann auch vorgesehen sein, die Motordrehzahl über eine Getriebestufe an die Drehzahl des Gewindetriebs anzupassen. Bevorzugt wird hier ein Riemenantrieb, der gemeinsam mit dem hydrostatischen Getriebe einen besonders geräusch- und verschleißarmen Antrieb bildet. Es kann auch vorgesehen sein, ein Stirnrädergetriebe einzusetzen, weil dieses im Gegensatz zu einem Riemenantrieb die Mutter in Radialrichtung nur gering mit Last beaufschlagt.

Nachfolgend wird ein Ausführungsbeispiel der vorliegenden Erfindung anhand der Zeichnung näher beschrieben. Es zeigen:
- Fig. 1:: den Linearantriebsteil einer erfindungsgemäßen Zahnstangenlenkung in einer Seitenansicht;
- Fig. 2:: den Antrieb aus Fig. 1 in einem Längsschnitt entlang der Linie A-A;
- Fig. 3:: einen Querschnitt durch die Antriebsmutter und die Zahnstange entlang der Linie B-B aus Fig. 2;
- Fig. 4:: ein Detail der Antriebsmutter aus Fig. 3 im Querschnitt C-C; sowie
- Fig. 5:: das Detail D aus Fig. 2.

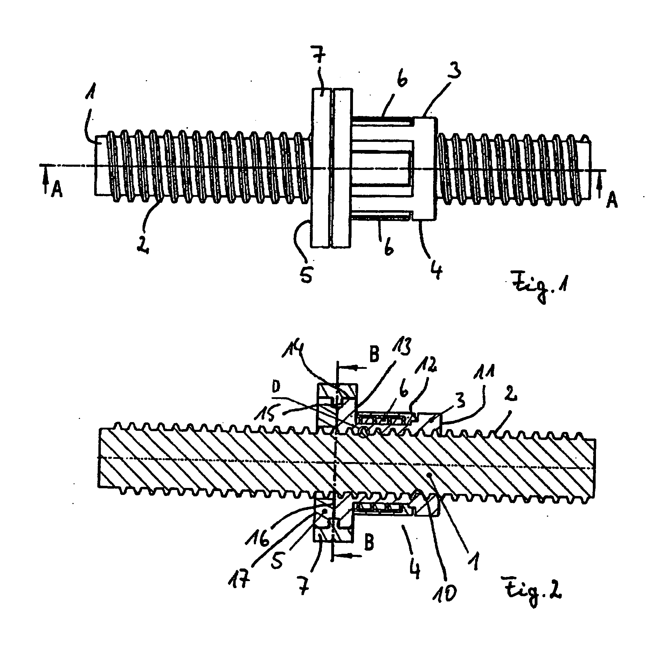

Die Fig. 1 zeigt einen Abschnitt einer Zahnstange 1, die mit einem Gewinde 2 versehen ist. Das Gewinde 2 weist im Querschnitt trapezförmige Gewindegänge auf. Es sind aber auch andere Querschnittsformen des Gewindes möglich, beispielsweise rechteckige Gewindegänge.

Eine Mutter 3 kämmt mit dem Gewinde 2. Die undrehbar und in Richtung ihrer Längsachse verschieblich in einem nicht dargestellten Lenkungsgehäuse gelagerte Zahnstange wird bei Drehung der Mutter 3 in ihrer Axialrichtung bewegt, da die Mutter ebenfalls drehbar in dem Lenkungsgehäuse gelagert ist. Es handelt sich also um ein Getriebe, das eine Drehbewegung der Mutter 3 in eine Axialbewegung der Zahnstange 1 umsetzt.

Die Mutter 3 weist allgemein einen ersten Abschnitt 4 mit relativ geringem Durchmesser und eine zweiten Abschnitt 5 mit relativ großem Durchmesser auf. In dem Abschnitt 4 sind an der im Wesentlichen kreiszylindrischen äußeren Umfangsfläche gleichmäßig vier Öldruckregler 6 angeordnet. In dem Abschnitt 5 ist ein Lageraußenring 7 vorgesehen, der zur Lagerung der Mutter 3 in dem Lenkungsgehäuse dient.

Die Fig. 2 zeigt die beschriebene Anordnung in einem Längsschnitt entlang der Linie A-A aus Fig. 1. Gleiche Bauelemente tragen gleiche Bezugsziffern.

Die Mutter 3 ist auf ihrer Innenseite mit einem trapezförmigen Gewinde 10 ausgestattet, das kompatibel zu dem Außengewinde 2 der Zahnstange 1 ist. Die Mutter 3 ist weiter ausgehend von einer freien Schulter 11 einstückig bis zu der Linie B-B ausgeführt. In dem Abschnitt 4 sind insgesamt vier Ausnehmungen 12 angeordnet, in denen die Öldruckregler 6 einliegen. Angrenzend an die Öldruckregler 6 gehen die Ausnehmungen 12 rechtwinklig in einen ringförmigen Bund 13 über. Der Bund 13 weist radial nach außen und liegt in einer Ebene senkrecht zur Symmetrieachse der Zahnstange 1. Eine äußere zylindrische Umfangsfläche 14 schließt an den Bund 13 an. Diese geht wiederum in einem Rücksprung 15 über in eine parallel zu dem Bund 13 angeordnete Flanschfläche 16. Die Flanschfläche 16 fällt in der Darstellung der Figur 2 mit der Linie B-B zusammen. Schließlich ist ein Ring 17 stirnseitig auf die Flanschfläche 16 aufgesetzt. Der Ring 17 ist in seinem radial äußeren Bereich spiegelbildlich zu dem Bund 13, der Umfangsfläche 14 und dem Rücksprung 15 ausgebildet. Innen ist der Ring 17 mit einer lichten Öffnung ausgestattet, die ausreichend groß ist, um die Zahnstange 1 mit der Verzahnung 2 frei durchschiebbar zu machen.

Die Umfangsfläche 14, der Rücksprung 15 und das spiegelbildliche Gegenstück des Rings 17 bilden eine etwa T-förmige Aufnahme für den im Querschnitt etwa T-förmigen Lageraußenring 7.

Die Zahnstange 1 mit dem Gewinde 2 ist von dem Ring 17 ringförmig umgeben. Schrauben 18 durchsetzen den Ring 17 achsparallel und dienen zu seiner Befestigung an der Flanschfläche 14 der Mutter 3. Der Lageraußenring 7 sitzt konzentrisch auf dem Ring 17. Er ist mit einem umlaufenden Zuführkanal 19 versehen, von dem aus insgesamt sechs Bohrungen 20 auf die Trennebene zwischen der Flanschfläche 14 und dem Ring 17 zu verlaufen. Die Mutter 3 mit dem daran befestigten Ring 17 ist gegenüber dem Lageraußenring 7 drehbar.

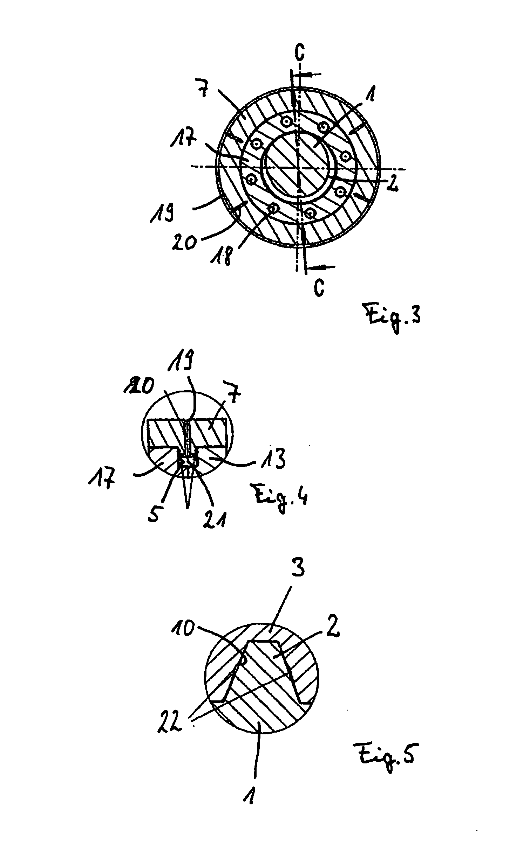

Ein teilweiser Längsschnitt entlang der Linie C-C ist in der Figur 4 dargestellt. Hier ist der Bereich zwischen dem Lageraußenring 7, dem Bund 13 und dem Ring 17 vergrößert dargestellt. Der Kanal 19 ist in Form einer umfangsseitig eingestochenen Nut ausgeführt, während die Bohrung 20 in Radialrichtung des Lageraußenrings 7 verläuft. Es ergibt sich zwischen dem Lageraußenring 7, dem Bund 13 und dem Ring 17 im Bereich der Rücksprünge 15 ein Kanal 21, der geeignet ist, Hydraulikflüssigkeit oder ein anderes Fluid unter Druck zu führen.

Die Figur 5 zeigt schließlich das Detail D aus Figur 2. Die Zahnstange 1 mit der trapezförmigen Verzahnung 2 greift in das kompatible Gewinde 10 der Mutter 3 ein. An den aneinander liegenden Flanken des Trapezgewindes sind Ausnehmungen 22 ausgebildet, die in diesem Fall in die Flanke der Mutter 3 eingeformt sind. Die Ausnehmungen 22 wirken als Öltaschen, die Hydraulikflüssigkeit aufnehmen und halten.

Im Betrieb wird der Lageraußenring 7 in einem Lenkungsgehäuse montiert. Die Zahnstange 1 ist in wenigstens einem weiteren Lager (nicht dargestellt) in Axialrichtung verschieblich gelagert. Die Mutter 3 ist drehbar mit einem Antrieb verbunden. Ein Hydraulikfluid wird von außen über die umlaufende Nut 19 eingespeist und tritt unter Druck durch die Kanäle 20 in den Zwischenraum 21 ein. Von dort wird das Hydraulikfluid weiter über die Druckregler 6 in die Gewindeverzahnung 2, 10 gespeist. Dort tritt das Hydraulikfluid in die Ausnehmungen 22 ein. Es bildet sich ein hydrostatischer Film, der sowohl die Mutter 3 und den Ring 17 in dem Lageraußenring 7 trägt und lagert, als auch die Mutter 3 gegenüber der Zahnstange 1 lagert. Der unter Druck stehende Film von Hydraulikfluid trägt dabei die Zahnstange 1 und trennt die Mutter 3 davon. Da kein direkter metallischer Kontakt zwischen der Mutter 3 und der Zahnstange 1 besteht, entstehen bei einer Bewegung, wenn überhaupt, nur äußerst geringe Geräusche. Die im Betrieb rotierende hydrostatische Mutter 3 ist durch den Lageraußenring 7 mit einem integrierten hydrostatischen Lager ausgerüstet und benötigt nur an dieser Stelle eine Ölzuführung. Die Gewindespindel schwebt praktisch auf einem hydrostatischem Ölfilm.

Die Regler 6 steuern die bei Bewegung erforderlichen Ölströme, so dass die Ölfilmdicke unabhängig von der Geschwindigkeit und Belastung nahezu konstant gehalten werden kann. Die auf diese Weise spielfrei gemacht hydrostatische Mutter 3 ist sehr steif und weist dennoch eine sehr geringe Reibung auf. Die Positioniergenauigkeit ist insbesondere auch wegen der geringen Reibung ausgesprochen gut und nur noch von den eingesetzten Sensoren und der Steuerung abhängig. Gegenüber einer dynamischen Belastung im Betrieb wirkt der dargestellte Gewindetrieb wie ein Stoßdämpfer mit sehr guter Dämpfung. Er läuft geräuschlos und erzeugt insbesondere keine Vibrationen, wie sie von Kugelgewindetrieben bekannt sind. Die hydrostatische Mutter 3 ist durch ihre hohe Steifigkeit geeignet, die Zahnstange 1 mit nur einem Lager (Lageraußenring 7) zu lagern. Alle hydraulischen Zu- und Ableitungen, die für den Betrieb erforderlich sind, können in der Außenfläche des Lageraußenrings 7 zugeführt werden.

Die insoweit beschriebene Lenkung kann vorzugsweise für schwerere Kraftfahrzeuge eingesetzt werden, beispielsweise für große PKW oder leichte LKW. Sie zeichnet sich aus durch eine große Steifigkeit, eine große Positioniergenauigkeit und eine geringe Geräuschentwicklung. Dies bringt für das Fahrverhalten und den Komfort gerade bei großen PKW Vorteile. Die übertragbaren Kräfte und die Dauerhaftigkeit des Antriebs sind größer als bei Kugelgewindetrieben, so dass auch für Anwendungen in LKW diese Lenkung in Frage kommt. Gegenüber den bekannten hydraulischen Servolenkungen ist der Aufwand für die Hydraulik beschränkt auf relativ kleine und mit niedrigem Druck arbeitende Komponenten, wobei diese nur die Lagerung der Mutter 3 versorgen müssen. Steuerventile und große externe Hydraulikpumpen entfallen gegenüber den bekannten hydraulischen Servolenkungen. Auch wenn nicht vollständig auf hydraulische Komponenten verzichtet werden kann, wie dies beispielsweise bei elektrischen Servolenkungen mit Kugelgewindetrieb möglich ist, ergibt sich dennoch ein Vorteil hinsichtlich Bauraum und Herstellungskosten.

### Bezugszeichenliste:

1. Zahnstange
2. Gewinde
3. Mutter
4. erster Abschnitt
5. zweiter Abschnitt
6. Öldruckregler
7. Lageraußenring
10. Trapezförmiges Gewinde
11. Freie Schulter
12. Ausnehmungen
13. Bund
14. Umfangsfläche
15. Rücksprung
16. Flanschfläche
17. Ring
18. Schrauben
19. Zuführkanal
20. Bohrung
21. Kanal
22. Ausnehmungen

## Patentansprüche

1. Zahnstangenservolenkung für Kraftfahrzeuge, mit einem Lenkungsgehäuse, in dem eine Zahnstange (1) längsverschieblich gelagert ist, und mit einem Getriebe zur Umsetzung einer Drehbewegung eines Servomotors in eine Längsbewegung der Zahnstange(1), **dadurch gekennzeichnet, dass** das Getriebe zur Umsetzung einer Drehbewegung in eine Linearbewegung ein hydrostatischer Spindeltrieb mit einer Mutter (3) ist.

2. Zahnstangenservolenkung nach Anspruch 1, **dadurch gekennzeichnet, dass** ein Hohlwellenmotor als Antriebsmotor der Mutter (3) vorgesehen ist.

3. Zahnstangenservolenkung nach einem der vorhergehenden Ansprüche, **dadurch gekennzeichnet, dass** der Antriebsmotor über eine Getriebestufe mit der Mutter gekoppelt ist.

4. Zahnstangenservolenkung nach einem der vorhergehenden Ansprüche, **dadurch gekennzeichnet, dass** die Getriebestufe ein Riemengetriebe ist.

5. Zahnstangenservolenkung nach einem der vorhergehenden Ansprüche 1 - 3, **dadurch gekennzeichnet, dass** die Getriebestufe ein Stirnrädergetriebe ist.

## Claims

1. Rack and pinion power steering system for motor vehicles, having a steering housing, in which a steering rack (1) is mounted longitudinally displacably and having a gear mechanism for converting a rotational movement of a servo motor into a longitudinal movement of the steering rack (1), **characterised in that** for converting a rotational movement into a linear movement the gear mechanism is a hydrostatic spindle drive with a nut (3).

2. Rack and pinion power steering system according to Claim 1, **characterised in that** a hollow shaft motor is provided as the drive motor of the nut (3).

3. Rack and pinion power steering system according to any one of the preceding claims, **characterised in that** the drive motor is coupled to the nut via a gear stage.

4. Rack and pinion power steering system according to any one of the preceding claims, **characterised in that** the gear stage is a belt gear.

5. Rack and pinion power steering system according to any one of Claims 1 to 3, **characterised in that** the gear stage is a spur gear.

## Revendications

1. Direction assistée à crémaillère pour véhicules automobiles, comprenant un carter de direction dans lequel est montée une crémaillère (1) en coulissement longitudinal, et comprenant un système de transmission pour convertir un mouvement de rotation d'un servomoteur en un mouvement longitudinal de la crémaillère (1), caractérisée en ce le système de transmission pour convertir un mouvement de rotation d'un servomoteur en un mouvement linéaire est une transmission à vis, hydrostatique, comprenant un écrou (3).

2. Direction assistée à crémaillère selon la revendication 1, **caractérisée en ce qu'**il est prévu un moteur à arbre creux en tant que moteur d'entraînement de l'écrou (3).

3. Direction assistée à crémaillère selon l'une des revendications précédentes, **caractérisée en ce que** le moteur d'entraînement est couplé à l'écrou par l'intermédiaire d'un étage de transmission.

4. Direction assistée à crémaillère selon l'une des revendications précédentes, **caractérisée en ce que** l'étage de transmission est une transmission à courroie.

5. Direction assistée à crémaillère selon l'une des revendications précédentes 1-3, **caractérisée en ce que** l'étage de transmission est une transmission à engrenages droits.
